# EUROPÄISCHE PATENTSCHRIFT

(11) **EP 0 551 348 B1**
(45) Veröffentlichungstag und Bekanntmachung des Hinweises auf die Patenterteilung: **31.05.1995**
(21) Anmeldenummer: 91917415.1
(22) Anmeldetag: 02.10.1991
(51) Int. Cl.: B60L 5/32

(54) **DRUCKLUFT-HUBEINRICHTUNG FÜR STROMABNEHMER**
COMPRESSED AIR LIFTING DEVICE FOR CURRENT COLLECTORS
DISPOSITIF DE LEVAGE A AIR COMPRIME POUR COLLECTEURS DE COURANT

(30) Priorität: 03.10.1990 AT 1993/90
(43) Veröffentlichungstag der Anmeldung: 21.07.1993
(73) Patentinhaber: SIEMENS AKTIENGESELLSCHAFT, 80333 München (DE); Siemens Aktiengesellschaft Österreich, 1210 Wien (AT)
(72) Erfinder: GRONDINGER, Günter, A-1235 Wien (AT)
(86) Internationale Anmeldenummer: EP9101888
(87) Internationale Veröffentlichungsnummer: WO9205976

(56) Entgegenhaltungen:
- EP-A- 0 403 375
- DE-A- 2 841 367

## Beschreibung

Die Erfindung betrifft eine Druckluft-Hubeinrichtung für Stromabnehmer.

Eine Druckluft-Hubeinrichtung, bei der das auf die Basiswelle wirkende Antriebselement Federbälge aufweist und gleichzeitig die einzige Hubfeder- und ebenso Senkfederanordnung bildet, ist aus der AT-B 359 553 sowie aus der korrespondierenden DE-A-28 41 367 bekannt. Im bekannten Fall sind mehrere Federbälge mittels einer gemeinsamen ersten Federbalgplatte am Grundrahmen des Stromabnehmers montiert. Eine zweite Federbalgplatte ist mit einer Hubstange starr verbunden, die durch eine in der ersten Federbalgplatte angeordnete Führungsbohrung geführt ist. Die Hubstange wirkt über einen gelenkig gelagerten Zwischenhebel auf einen mit der Basiswelle des Stromabnehmers starr verbundenen Schwenkhebel. Bei Beaufschlagung der Federbälge mit Druckluft wird die zweite mit der Hubstange verbundene Federbalgplatte ausgeschoben und dadurch der Stromabnehmer angehoben.

Eine derartige Hubeinrichtung weist zwei wesentliche Nachteile auf. Zum einen sind die vollkommen freiliegenden Federbälge nicht gegen negative Einwirkungen von außen, das sind Umwelteinflüsse wie UV-Strahlung, Verschmutzung oder Vereisung sowie gegen mechanische Beschädigungen geschützt, zum anderen kommt es wegen der großen Exzentrizität im Kraftverlauf zu sehr starken Kantenbelastungen der Führungsbohrung. Da der Antrieb als Hub- und Senkfeder wirkt und deshalb die Hubstange dauernd Verschiebungen in ihrer Achsrichtung erfahrt, kommt es zu starkem Verschleiß. Zufolge der Schwingungen des Wagenkastens treten außerdem senkrecht zur Achsrichtung der Hubstange Massenkräfte in allen beweglichen Teilen auf, deren Momente ebenfalls die Führungsbohrung belasten.

In der älteren, nachveröffentlichten EP-A-0 403 375 ist eine Druckluft-Hubeinrichtung offenbart, bei der das auf die Basiswelle wirkende Antriebselement Federbälge aufweist und gleichzeitig die einzige Hubfeder- und ebenso Senkfederanordnung bildet. Als Antriebselement ist ein Rollbalgzylinder vorgesehen, dessen Kolbenstange mittels mindestens eines seilartigen Elementes und mindestens einer, vorzugsweise unterschiedliche Radien aufweisenden Kurvenscheibe mit dem Basiswellenrohr des Stromabnehmers in Wirkverbindung steht.

Eine Druckluft-Hubeinrichtung, die die aufgezeigten Mängel nicht aufweist, ist im Anspruch angegeben. Der Vorteil liegt zum einen darin, daß der Rollbalg durch den ihn umgebenden Führungszylinder gegen negative Einwirkungen von außen geschützt ist. Zum anderen besteht wegen des biegsamen seilartigen Elements eine Entkopplung zwischen Basiswelle und Antriebselement bezüglich aller, quer zur Achse der Kolbenstange des Rollbalgzylinders gerichteten Schwingungen und damit eine wesentlich verminderte Beanspruchung der Kraftübertragungselemente.

Dadurch, daß der Rollbalgzylinder in vertikaler Richtung schwenkbar gelagert ist, kann mit geringerem Aufwand ein günstigerer Verlauf des Kraftflusses erzielt werden, der weniger Reibung und damit einen besseren Wirkungsgrad sowie eine Verringerung des Verschleisses erbringt.

Mögliche Ausführungsbeispiele sollen nachfolgend anhand der Zeichnungen näher beschrieben werden. Es zeigen:
- FIG 1: einen Rollbalgzylinder in einer Schnittansicht,
- FIG 2-5: schematisierte Anordnungen mit fest und mit schwenkbar montierten Rollbalgzylindern sowie mit einem oder mehreren seilartigen Elementen.

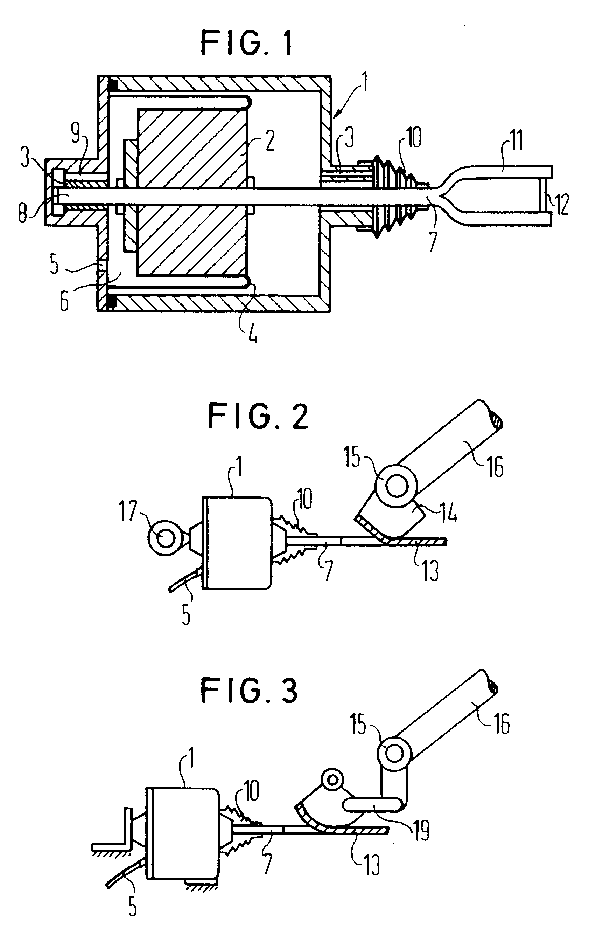

Der Aufbau des Rollbalgzylinders 1 ist derart gestaltet, daß, wie aus FIG 1 ersichtlich, der Kolben 2 beidseitig in einer reibungsarmen Führung 3, etwa einer bekannten Kugelführung gelagert ist. Der Rollbalg 4 wird durch die beim Druckluftanschluß 5 in den Zylinderraum 6 eintretende Druckluft zusammen mit dem Kolben 2 und der als Druckstange wirkenden Kolbenstange 7 gegen die durch das Gewicht des Stromabnehmergestells verursachte Kraft bewegt und hebt dadurch den Stromabnehmer an. Das hintere Ende 8 der Kolbenstange 7 kann in bekannter Weise als Hubdämpfer dienen, indem es angesaugte Luft durch die Überströmöffnung 9 in den Zylinderraum 6 drückt. Da der Luftdruck nur in dem dem hinteren Ende 8 der Kolbenstange 7 zugekehrten Zylinderraum 6 wirkt, ist keine Dichtung erforderlich, die bewegungsbelastet und daher starkem Verschleiß unterworfen wäre. Eine dehnbare Kappe 10 zum Schutz gegen das Eindringen von Staub oder Fremdkörpern ist jedoch zweckmäßig. Die Kolbenstange 7 weist vorteilhaft einen gabelförmig geformten Endbereich 11 mit einem Quersteg 12 auf, der zur Befestigung eines hier nicht dargestellten Seiles dient.

FIG 2 zeigt eine Anordnung, bei der die Kolbenstange 7 über ein Seil 13 und eine Kurvenscheibe 14 auf das im Grundrahmen des Stromabnehmers gelagerte Basiswellenrohr 15 wirkt, wobei durch dessen Verdrehung der Unterarm 16 des Stromabnehmers die zum Anheben des Stromabnehmers erforderliche Verschwenkung erfährt. Durch entsprechende Formgebung der Kurvenscheibe 14 kann in bekannter Weise ein optimaler Verlauf des Kraft-Drehmomentverhältnisses erzielt werden. Der Rollbalgzylinder 1 selbst ist mittels eines Gelenkes 17 vertikal schwenkbar im Grundrahmen des Stromabnehmers gelagert. Dadurch kann die Kolbenstange 7 stets eine Lage einnehmen, bei der an ihr keine Querkräfte bzw. Momente auftreten.

Die Anordnung nach FIG 3 zeigt eine Variante, bei der durch Zwischenschaltung einer Schwinge 18 mit kreisförmigem Profil der starr am Grundrahmen des Stromabnehmers gelagerte Rollbalgzylinder 1 von Querkräften freigehalten wird. Die Übertragung des in der Schwinge 18 erzeugten Drehmomentes auf das Basiswellenrohr 15 kann über eine Druckstange 19 erfolgen.

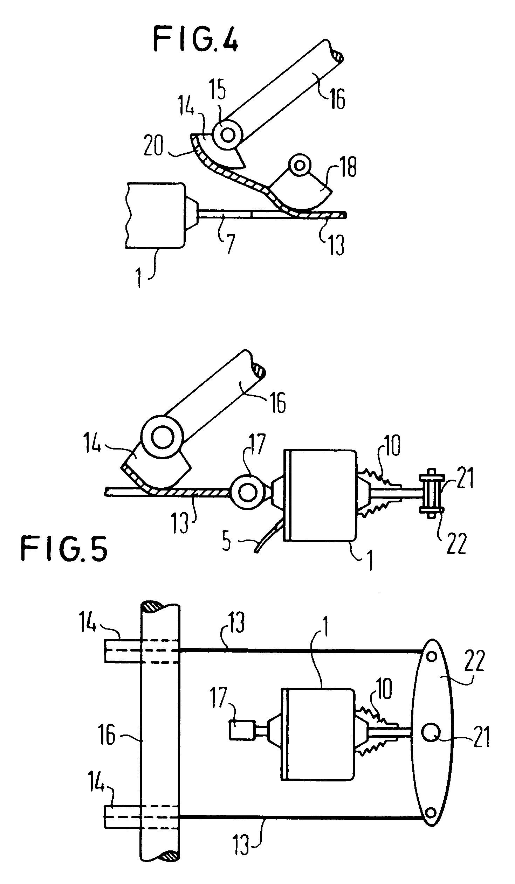

Bei der in FIG 4 mit gleichen Bezugszeichen gezeigten Anordnung erfolgt die Übertragung des in der Schwinge 18 erzeugten Drehmoments auf das Basiswellenrohr 15 durch ein weiteres Seil 20.

In FIG 5 ist in Grund- und Aufriß eine weitere Möglichkeit der Kraftübertragung durch eine an der Kolbenstange 7 mittels eines Bolzens 21 gelagerte Ausgleichsschwinge 22 und Seile 13 zu den Kurvenscheiben 14 am Basiswellenrohr 15 dargestellt. Diese Anordnung gestattet unter Berücksichtigung der gegebenen Raumverhältnisse die Verwendung längerer Seile.

## Patentansprüche

1. Druckluft-Hubeinrichtung für Stromabnehmer, bei der das auf die Basiswelle wirkende Antriebselement Federbälge aufweist und gleichzeitig die einzige Hubfeder- und ebenso Senkfederanordnung bildet, wobei das Antriebselement ein an sich bekannter Rollbalgzylinder (1) ist, dessen Kolbenstange (7) mittels mindestens eines seilartigen Elementes (13,20) und mindestens einer, vorzugsweise unterschiedliche Radien aufweisenden Kurvenscheibe (14) mit dem Basiswellenrohr (15) des Stromabnehmers in Wirkverbindung steht, und wobei der Rollbalgzylinder (1) in vertikaler Richtung schwenkbar gelagert ist.

## Claims

1. Compressed-air lifting device for current collectors, where the drive element acting on the base shaft has spring bellows and at the same time forms the single lifting-spring and likewise lowering-spring arrangement, whereby the drive element is a rolling bellows cylinder (1) known in itself, the piston rod (7) of which is in operative connection by means of at least one cable-like element (13, 20) and at least one cam disc (14), preferably having different radii, with the base shaft pipe (15) of the current collector, and whereby the rolling bellows cylinder (1) is pivotally mounted in the vertical direction.

## Revendications

1. Dispositif de levage à air comprimé pour collecteur de courant, dans lequel l'élément d'entraînement qui agit sur l'arbre de base comporte des soufflets élastiques et forme en même temps le dispositif unique à ressorts de levage et également à ressorts d'abaissement, l'élément d'entraînement étant un cylindre à soufflet roulant (1) connu en soi, dont la tige de piston (7) coopère avec le tube (15) de l'arbre de base du collecteur de courant à l'aide d'au moins un élément en forme de câble (13,20) et d'au moins un disque de came (14) ayant, de préférence, des rayons différents, le cylindre à soufflet roulant (1) étant monté basculant dans la direction verticale.
